# EUROPEAN PATENT APPLICATION

(11) **EP 4 607 514 A1**
(43) Date of publication of application: **27.08.2025**
(21) Application number: 24159307.8
(22) Date of filing: 23.02.2024
(51) Int. Cl.: G11B 5/012, B09B 3/00, G11B 23/28, B23D 35/00

(54) **METHOD FOR DISASSEMBLING A HARD DISK DRIVE AND SEPARATING DEVICE**

(71) Applicant: Inserma Anoia S.L, 08787 La Pobla de Claramunt (ES)
(72) Inventor: Ortiz Liebanas, Francisco, 08700 Igualada (ES)
(74) Representative: LBP Lemcke, Brommer & Partner Patentanwälte mbB

(57) **Abstract**

Method for disassembling a hard disk drive (1) comprising the following method steps:
A) Providing the hard disk drive (1), which at least comprises a magnetic disk (4), a spindle assembly (3) and an actuator (5), wherein the magnetic disk (4) is rotatably mounted by means of the spindle assembly (3) and wherein the actuator (5) is configured to move a read/write-head (7) relative to the magnetic disk (4) and is arranged adjacently to the magnetic disk (4);
B) Positioning the hard disk drive (1) in a separating device (21), which comprises a holding means (8), by means of which the hard disk drive (1) is held and which further comprises at least a separating means (13), which is moveably mounted with respect to the holding means (8);
C) Moving the separating means (13) relative to the holding means (8) such that the separating means (13) comes into separating engagement with the hard disk drive (1), thereby separating at least the magnetic disk (4), the spindle assembly (3) and the actuator (5) of the hard disk drive (1) from each other, in particular in a single process step;
D) Separately discharging of at least three fractions of the hard disk drive (1), which comprise the magnetic disk (4), the spindle assembly (3) and the actuator (5) respectively.

## Description

The invention refers to a method and a separating device for disassembling a hard disk drive.

Rare earth metals are crucial materials for the success of the green and digital transformation of various industrial sectors and are used in various types of electrical machines. Hard disk drives as typically used in computer systems or comparable data processing systems often comprise rare earth materials, which are used as permanent magnets. Thus, recycling and reuse of permanent magnets of hard drives, which have reached their end of life, may play a key role in resilient and sustainable production of electrical machines, for example for industrial drives systems or electric mobility applications.

Even though measures to recycle rare earths have made progress in terms of their efficiency, the recovery of rare earths from hard disk drives poses a challenge. In terms of design, said hard disk drives are optimized so that they require as little installation space as possible when installed and still enable optimum functionality with regard to storing and providing data. However, these kinds of designs make it difficult to recover all valuable materials, especially rare earths from hard disk drives and often require manual disassembly to retrieve all valuable components of a hard disk drive. It is therefore an objective of the present invention to provide means, which enable a reliable and cost efficient disassembly of hard disk drives.

The objective is solved by a method according to claim 1 and a device according to claim 11. Preferred embodiments are subjects of dependent claims.

The method according to the invention is performed for disassembling a hard disk drive and comprises the following method steps:
A) Providing a hard disk drive, which at least comprises a magnetic disk, a spindle assembly and an actuator, wherein the magnetic disk is rotatably mounted by means of the spindle assembly and wherein the actuator is configured to move a read/write-head relative to the magnetic disk and is arranged adjacently to the magnetic disk;
B) Positioning the hard disk drive in a separating device, which comprises a holding means, by means of which the hard disk drive is held and which further comprises at least a separating means, which is moveably mounted with respect to the holding means;
C) Moving the separating means relative to the holding means such that the separating means comes into separating engagement with the hard disk drive, thereby separating at least the magnetic disk, the spindle assembly and the actuator of the hard disk drive from each other, in particular in a single process step;
D) Separately discharging of at least three fractions of the hard disk drive, which comprise the magnetic disk, the spindle assembly and the actuator respectively.

The invention is based on the finding that hard disk drives can essentially be divided into three fractions in order to enable efficient recycling of permanent magnets used in hard disk drives and thus valuable rare earth materials. These three fractions may each be formed by at least one magnetic disk, the spindle assembly and the actuator alone or together with other components of the hard disk drive. By carrying out the method steps according to the invention, it is in particular possible to separate at least the spindle assembly and the actuator, which generally contain rare earth materials, from the remaining components of the hard disk drive, in particular the magnetic disk.

Furthermore, investigations have shown that the method according to the invention offers advantages for subsequent disintegration of the magnetic disk, which is typically crushed and/or shredded by mechanical elements. Without a separation of the spindle assembly and the actuator from the magnetic disk, these components have a strong wear effect on the mechanical elements of a crushing device. Separate removal of the magnetic disk, the spindle assembly and the actuator therefore not only make it possible to obtain all the relevant rare earth materials from the spindle assembly and the actuator, but also to improve the further processing of the magnetic disk by protecting the mechanical elements of a shredding and/or crushing device.

It is within the scope of the invention that, in addition to the magnetic disk, the spindle assembly and the actuator, the hard disk drive in step A) also comprises further components, for example a common base, which in particular may be a part of a housing or, for example, an actuator arm with the read/write head, which can be adjusted by means of the actuator.

It is within the scope of the invention that the hard disk drive in method step A) is provided in a state in which the hard disk drive was previously used in a computer or comparable data processing device. In other words, no processing step needs to be carried out before process step A) in order to be able to disassemble the hard disk drive by means of the method according to the invention. Of course, it is nevertheless possible that in a preceding step the hard disk drive is prepared for carrying out the method according to the invention, for example by removing one or more elements for example housing components or electric printing boards or wires. It is within the scope of the invention that there is more than only one magnetic disk but rather a stack of magnetic disks, which are arranged essentially coaxially to each other.

In method step B), the hard disk drive may be positioned in the separating device by manual handling and/or by means of automatable handling means, for example by means of an industrial robot and/or a conveyor belt which serves to position the hard disk drive in the separating device. The holding means can be a single-part or multipart device which serves to hold the hard disk drive in a defined position so that it can be processed at least in step C). The separating means can be a single-part or multipart tool which is moveably arranged relative to the holding means in such a way that it comes into separating engagement with the hard disk drive held in the holding means.

With regard to process step C), it is within the scope of the invention that the separating means is moved in one or more relative movements with respect to the holding means in order to come into separating engagement with the hard disk drive. However, it is particularly advantageous if the above-mentioned components can be separated from one another in a single process step. This aspect is based on the realization that the actuator and the spindle assembly are regularly accessible simultaneously on at least one side of the hard disk drive in order to separate it from the magnetic disk. In the context of the present invention, the term disassembly can be understood as a dismantling of the hard disk drive, in which in particular a separating and destructive processing of the hard disk drive takes place.

Separate removal of the magnetic disk, the spindle assembly and the actuator can take place in method step D) in several sub-steps, for example by first releasing and removing the spindle assembly and the actuator from the hard disk drive and then removing the remaining components, which in particular contain at least one magnetic disk. It is also within the scope of the invention that the removal of the magnetic disk, the spindle assembly and the actuator take place essentially simultaneously. Process step D) can be carried out manually and/or automatically, in particular by means of an automated handling means.

In a preferred embodiment a position of the actuator with respect to the hard disk drive and/or with respect to the holding means is detected before and/or during method step B). The hard disk drive is arranged or rearranged with respect to the holding means depending on the position of the actuator.

It is a finding that the position of the actuator for a plurality of hard disk drives of different manufacturers and designs is arranged at comparable positions on the hard disk drives and in particular adjacent to the magnetic disk and the spindle assembly, so that knowledge of the position of the actuator can help to arrange the hard disk drive in the holding means in such a way that it can be processed in a reliable manner by the separating means. In particular, this makes it possible to use simple separating means, in which the at least two separating portions are fixedly arranged relative to each another and it can be ensured solely by correctly positioning the hard disk drive that both the spindle assembly and the actuator are reliably detached from the rest of the hard disk drive. In particular, the orientation of the hard disk drive in relation to the holding means can be set or changed as desired after detecting the position of the actuator.

In a preferred embodiment, the position of the actuator is detected by means of a magnetic sensor. The advantage of using a magnetic sensor is that the actuator does not have to be visually recognizable in order to detect its position. Due to the common use of permanent magnets in actuators, these can be localized via a magnetic field they generate. In the context of the invention, a magnetic sensor can be regarded as one or more sensor elements that are set up to detect a magnetic field or a change in a magnetic field. It is within the scope of the preferred embodiment that the magnetic sensor is arranged outside the separating device in order to detect the position of the actuator of a hard disk drive to be disassembled and to output a signal as a function of which the hard disk drive can be positioned in the holding means. It is also within the scope of the advantageous further development that the magnetic sensor is integrated within the separating device, preferably in the holding means and/or the separating means and/or a periphery of the holding means, in order to detect the position of the actuator with respect to the holding means.

The position of the actuator relative to the hard disk drive can be detected using the magnetic sensor by checking the hard disk drive over its entire surface and/or at specific points using the magnetic sensor. The magnetic sensor may emit a detection signal as soon the actuator is detected, which allows to choose an orientation of the hard disk drive in the holding means.

The position of the actuator relative to the holding means can be detected by integrating the magnetic sensor in an area of the holding means where the actuator is to be located for the execution of the procedure. The magnetic sensor may emit a detection signal when the hard disk drive is located in the desired position relative to the holding means.

In a preferred embodiment the holding means comprises at least a support section, on which the hard disk drive rests at least during method step C) and wherein the holding means comprises at least one recess section into which the separating means engages during method step C), in particular wherein the recess section of the holding means is in front and/or behind the hard disk drive with respect to the motion of the separating means and wherein preferably at least the spindle assembly and the actuator are discharged through the recess section in method step D).

It is an advantage of the preferred embodiment described above that the holding means can be of comparatively simple design, for example in the form of a plate on which the hard disk drive rests and which has, for example, at least at the positions of the actuator and the spindle assembly, recesses into which the separating means can engage, in particular immediately after they have come into separating engagement with the hard disk drive. This allows at least the actuator and the spindle assembly to be discharged through the recess sections while the rest of the hard disk drive, which in particular comprises the magnetic disk, remains in the holding means.

It is also possible that the holding means defines a cavity in which the hard disk drive can be positioned and which have a recess above and below the hard disk drive. This makes it possible to fix the hard disk drive immovably during process step C) so that the separating means can enter the cavity through the upper recess in order to come into separating engagement with the hard disk drive and at least the actuator and/or the spindle assembly can fall down via the lower recess. The rest of the hard disk drive, which in particular contains the magnetic disk, can be removed in the same way as the hard disk drive was inserted into the cavity.

Preferably, the holding means comprises a die and a holder and the hard disk drive is at least partially arranged between the die and the holder in method step B). A die can be regarded as a lower tool which essentially absorbs the forces during the processing of the hard disk drive. The holder can be regarded as a hold-down device which ensures the desired positioning of the hard disk drive during processing.

According to a preferred embodiment the separating means comprises at least two separating portions, which each engage with the hard disk drive in method step C) in order to separate the magnetic disk, the spindle assembly and the actuator from each other.

It is an advantage of the embodiment described above that the separating means can be designed particularly simply, since in principle only two separating portions are required to divide the hard disk drive into three fractions of components, each of which comprise the magnetic disk, the spindle assembly and the actuator respectively.

The separating portions can be designed as basically any elements that are suitable for separating the hard disk drive. However, it is particularly preferred, that a first separating portion is at least partially defined by a cutting edge, in particular a straight cutting edge, which engages with the hard disk drive adjacently to a corner region, in which the actuator is arranged and/or wherein a second separating portion is at least partially defined by a punching stamp, which engages with the spindle assembly and/or with a region of the magnetic disk, which surrounds the spindle assembly.

The preferred embodiment described above is based on the realization that the actuator is typically arranged in a corner area of the hard disk drive. A corner area of the hard disk drive can be regarded as a spatial area which is bounded by two adjacent narrow sides of the hard disk drive and by an imaginary separating plane which runs between the two narrow sides.

The first separating portion can be arranged in such a way that its cutting edge is aligned with the separating plane of the corner area and when the separating means is moved relative to the holding means, the hard disk drive is cut along the separating plane in order to separate the actuator from the remaining components of the hard disk drive.

The second separating portion, which is designed as a punching stamp, can in particular comprise a circumferential sharp-edged region which is arranged essentially in alignment with the spindle assembly and, when the separating means is adjusted, comes into engagement with a region of the hard disk drive which surrounds the spindle assembly in order to punch the spindle assembly out of the hard disk drive. It is also within the scope of the preferred embodiment that the punching stamp is essentially blunt and the spindle assembly is pressed out of the hard disk drive.

According to a preferred embodiment, positioning of the hard disk drive in method step B) is at least partially performed by a setting movement of a positioning means, which performs a return movement during method step C) simultaneously to the motion of the separating means.

The positioning means may at least be partially defined by an automated handling mechanism, which is mechanically coupled to the relative movement of the separating means and the holding means. In particular, it can be an automatic feeding device by means of which the separating device can be loaded with hard disk drives. In particular, the positioning means is mechanically coupled to the separating means so that only one drive means is required to enable both the hard disk drive to be disassembled and the positioning means to be retracted. Preferably, the positioning means is designed to arrange or position the hard disk drive on the holding means in process step B) and to remove the magnetic disk from the holding means after completion of process step C). This is particularly possible if the spindle assembly and the actuator fall through the at least one recess of the holding means.

Preferably, a size and/or geometry of the hard disk drive is determined before method step B) and the holding means and separating means are changeably mounted in the separating device depending on the size of the hard disk drive. By exchanging the holding means and the separating means, it is possible to use one and the same separating device for the disassembly of hard disk drives with different sizes and/or geometries.

Preferably, the separating means are moved hydraulically in method step C) and in particular exert a force of up to 250.000,00 Newtons to the hard disk drive. Tests have shown that the specified forces of up to 250,000 Newtons are sufficient to reliably dismantle hard disk drives typical of the market.

As mentioned above, the objective of the invention is also solved by a separating device for disassembling a hard disk drive. The separating device comprises a holding means, which is configured to hold the hard disk drive and further comprises a separating means, which is moveably mounted with respect to the holding means, and which is configured to come into separating engagement with the hard disk drive during a relative motion with respect to the holding means in order to separate the hard disk drive in three fractions, which each in particular comprise a magnetic disk, a spindle assembly and an actuator of the hard disk drive.

The separating device is suitable and intended for performing the method according to the invention or one of its preferred embodiments. Preferably, when carrying out the method or at least one of the method steps A), B), C) and D), the separating device according to the invention or one of the preferred embodiments described below is used. In particular, the explanations in connection with the method according to the invention or its preferred embodiments and the effects that can be achieved with it apply accordingly to the separating device and its preferred embodiments.

In a preferred embodiment, the separating device comprises a detection means, which is arranged and configured to detect a position of the actuator with respect to the hard disk drive and/or with respect to the holding means. Preferably the detection means comprises a magnetic sensor.

Preferably, the holding means comprises at least a support section, which is configured to receive the hard disk drive and wherein the holding means comprises at least a recess section and wherein the holding means and the separating means are arranged such that the separating means engage with the recess portion of the holding means during the relative motion.

According to a preferred embodiment the separating means comprise a first separating portion, which is at least partly defined by a cutting edge, in particular a straight cutting edge, and a second separating portion, which is at least partly defined by a punching stamp.

The project leading to the invention has received funding from the European Union's Horizon 2020 research and innovation programme under grant agreement No 101058598.

Advantages of the invention are explained below with reference to possible embodiments and the figures.
- Figure 1: shows a hard disk drive;
- Figure 2: shows two side views a), b) of a hard disk drive during disassembly;
- Figure 3: shows two top views a), b) of a hard disk drive during disassembly;
- Figure 4: shows a separating device;
- Figure 5: shows two perspective views a), b) of different variants of tools, which are useable in the separating device.

Rare earth elements are essential for the advancement of both green and digital transformations across various industries and are often required for various applications in different types of electric machinery. Components within hard disk drives, which are typically utilized in computer systems, contain such rare earth materials, which often serve as permanent magnets.

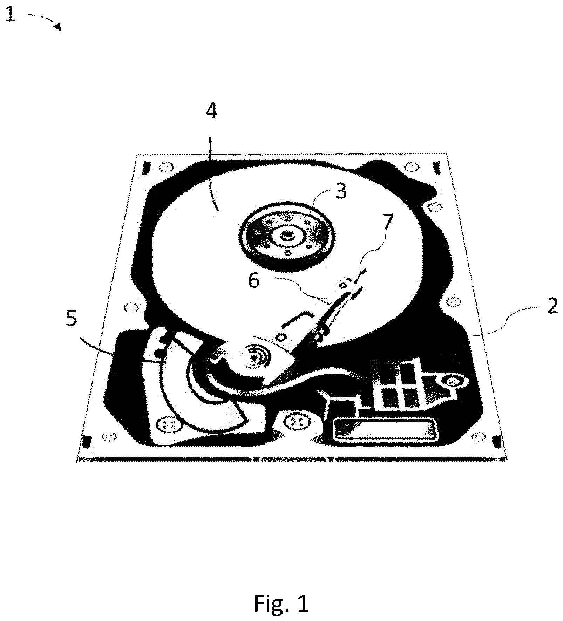

Figure 1 shows a hard disc drive 1, which comprises a base 2 that carries a spindle assembly 3, a magnetic disk 4 and an actuator 5 among other components, which are not described here in detail.

The magnetic disk 4 is a circular, flat and essentially rigid component, which is made of a non-magnetic material like aluminum or glass and is coated with a thin layer of magnetic material. The magnetic coating allows data to be stored in the form of magnetic patterns.

The magnetic disk 4 is rotatably mounted by means of the spindle assembly 3, which comprises a brushless direct current motor, which itself comprises a stator, a rotor, a motor shaft and bearings. The stator is the stationary part of the spindle assembly 3 and contains multiple coils of wire. When electric current passes through these coils, it generates a magnetic field. The rotor is a rotating part of the spindle assembly 3, which contains permanent magnets (not shown here in detail). When the stator's magnetic field interacts with the magnets on the rotor, it causes the rotor to rotate. The shaft of the rotor is connected to a spindle hub, which holds the magnetic disk 4. The bearings support the motor shaft, allowing it to rotate smoothly with minimal friction.

The actuator 5 is a motor that swings a read-write heads to the desired position with respect to the magnetic disk 4 in order to store information on the magnetic disk 4 or to read stored information. In order to enable this kind of motion, a metal plate of the actuator 5 supports a permanent magnet (not shown here in detail). Beneath this plate is a moving coil, often referred to as the voice coil, which is attached to the actuator hub and which holds an actuator arm 6 and a read/write-head 7. Similarly, to the spindle assembly 3, an electric current passing through the moving coil generates a magnetic field, which interacts with the magnetic field of the permanent magnet and leads to a desired motion of the actuator arm 6 and its read/write-head 7. Disassembly of the hard disk drivel is particularly necessary to remove the permanent magnets from the hard disk drive after it is no longer in use. To enable further processing of the permanent magnets and the remaining components, reference is made to the device and the process steps carried out with it in the following Figures.

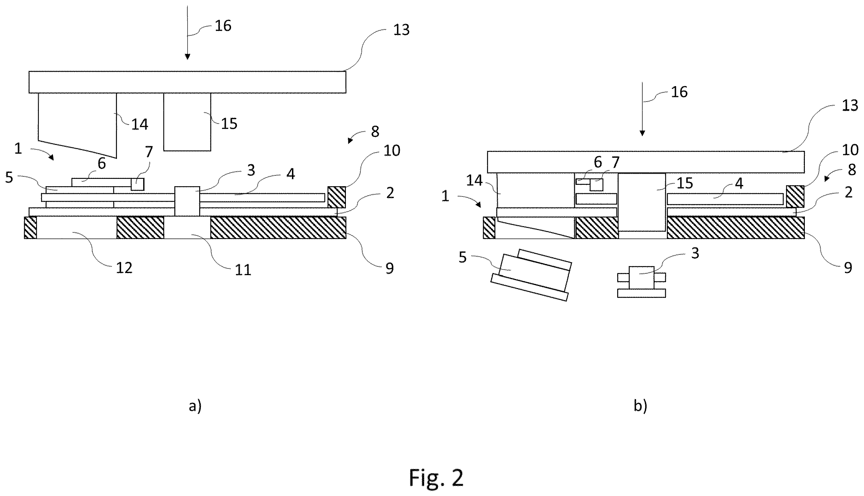

According to view a) of Figure 2, the hard disk drive 1 is held by a holding means 8, which comprises a die 9 and a holder 10. The die 9 carries the hard disk drive 1 and the holder 10 secures its position. The die 9 comprises two recesses 11 and 12, which are located below the spindle assembly 3 and the actuator 5 respectively.

A separating means 13 is arranged above the holding means 8 and is moveably arranged with respect to the holding means 8. The separating means 13 comprises two separating portions 14 and 15. Here, separating portion 14 is configured as a straight cutting edge. Separating portion 15 is configured as a punching stamp.

By displacing the separating means 13 according to the movement direction 16 and a force of up to 250.000,00 Newtons the separating portions 14 and 15 engage with the hard disk drive 1 such that the spindle assembly 3 and the actuator 5 are separated from the hard disk drive 1 and are discharged through the recesses 11 and 12 respectively. This is shown in view b) of Figure 2. For a better understanding of Figure 2, it is noted that separating portion 14 is located behind the magnetic disk 4 in view b) of Figure 2, but in front of the position in which the actuator 5 was located prior to its separation by means of separating portion 14 according to view a) of Figure 2. After moving back, the separating means 13, the magnetic disk 4 can be discharged from the holding means (not shown here).

It is an advantage, that an essential part of the magnetic disk 4, the spindle assembly 3 and the actuator 5 are discharged in three different fractions separately from each other. This enables a good further processing of said components.

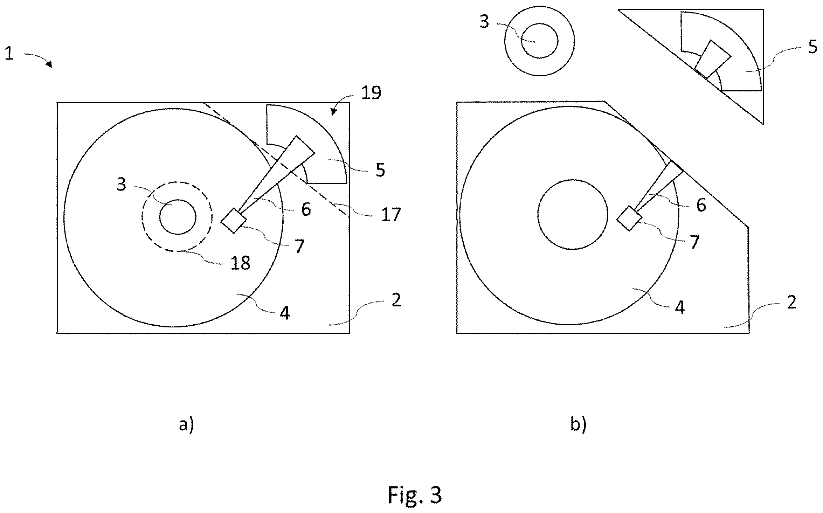

Figure 3 illustrates the separation process described in Figure 2 in two top views of the hard disk drive 1.

View a) of Figure 3 is a top view of the hard disk drive 1, which is identical to the hard disk drive 1 shown in Figures 1 and 2 and accordingly also comprises the base 2, the spindle assembly 3, the magnetic disk 4 and the actuator 5. In addition to the explanations already given in connection with Figures 1 and 2, view a) of Figure 2 also shows the separating edges 17 and 18, along which the spindle assembly 3 and the actuator 5 are separated from the rest of the hard disk drive 1, in particular the magnetic disk 4. In this context, the viewing direction according to views a) and b) of Figure 2 corresponds to a viewing direction from left in view a) of Figure 3.

According to view b) of Figure 3, the hard disk drive 1 is separated in three fractions of components, which comprise the spindle assembly 3, the magnetic disk 4 and the actuator 5 respectively.

As also shown in view b) of Figure 3, the actuator arm 6 and the read/write-head 7 can be separated from the actuator 5 and be discharged with the magnetic disk 4. Since the magnetic disk is typically shredded in a subsequent process step (not shown here), the rest of the actuator arm 6 and the read/write head 7 can be shredded as well. One advantage is that the spindle assembly 3 and the actuator 5, which contain permanent magnets, are not shredded with the magnetic disk but can be further processed and do not damage the tools of the shredding device.

As can also be seen in view a) of Figure 3, actuator 5 of the hard disk drive 1 is located in a corner region 19, which is bounded by the separating plane 17 and two narrow sides of the hard disk drive 1. It is a realization that actuators of hard disk drives are typically arranged in comparable positions at the corner region of hard disk drives. By determining the position of the actuator 5, it is possible to determine the orientation with which the actuator must be received in the holding means 8 so that the separating means can disassemble the hard disk drive 1 according to the fractions shown in view b) of Figure 3. Since the actuator 5 comprises permanent magnets, it is advantageous to use a magnetic sensor 20 to determine the position of the actuator 5 within the hard disk drive 1 so that even rigid tools 13 with their separating portions reliably come into separating engagement with the hard disk drive 1 in the right positions.

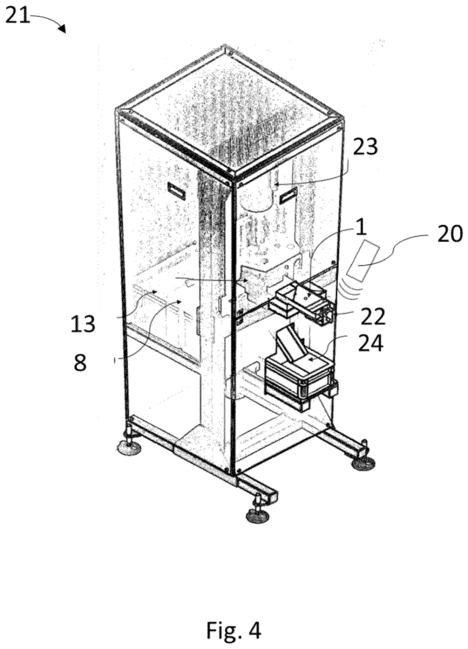

Figure 4 shows a separating device 21, which is configured to disassemble a hard disk drive 1 according to the explanations above with regard to Figures 1 to 3.

The separating device 21 comprises a magnetic sensor 20, which is configured to detect a position of the actuator with respect to a hard disk drive and which is located outside of the separating device 21. By means of the magnetic sensor 20, an orientation of the hard disk drive 1 can be validated or checked, before the hard disk drive 1 is fed in the separating device 20.

The separating device 21 comprises a frame in which the essential components already explained in connection with Figures 1 to 3 are arranged. Furthermore, the separating device 21 has a feed opening 22 via which the system can be fed with hard disk drives 1. In a manner not shown in detail here, a positioning means is provided to pick up the hard disk drive 1 and transfer it to the holding means 8 via the feed opening 22.

The separating means 13 are adjustable relative to the holding means 8 by means of a hydraulic cylinder 23. The positioning means, via which the hard disk drive 1 is fed to the separating device, are mechanically coupled to the separating means 13, so that the positioning means is extended at the same time as the separating means 13 moves.

At least the actuator 5 and the spindle assembly 3 can be output via the discharge opening 24. The magnetic disk 4 can also be removed through the discharge opening 24 or through the feed opening 23, through which the hard disk drive 1 is initially fed into the separating device 21.

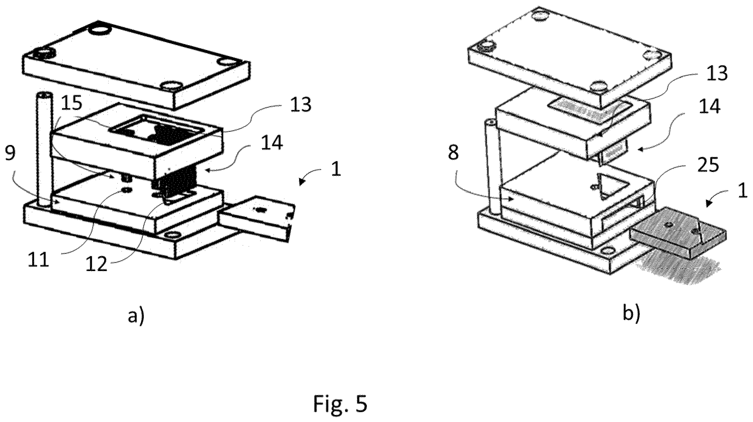

Figure 5 shows in view a) and b) different tools that can be used in the separating device 21.

View a) of Figure 5 shows a die 9, which is a lower tool as shown in Figure 2. A separating means 13 is arranged above the die 9 and comprises the separating portions 14 and 15. The die 9 comprises two recesses 11 and 12, in which the separating portions 14 and 15 engage respectively and through which the actuator 3 and the spindle assembly 5 are discharged. After determining the position of the actuator 3 with respect to the hard disk drive 1, the hard disk drive is arranged between the die 9 and the separating means 13 in a desired orientation.

View b) of Figure 5 shows a holding means 8, which defines a cavity 25 in which the hard disk drive 1 can be accommodated and which has openings in which the separating portions 14 and 15 engage and thus come into separating engagement with the hard disk drive 1. Further openings may be arranged at a bottom side of the holding means 8, through which at least the actuator 5 and the spindle assembly 3 may be discharged.

A magnet sensor 20 may be integrated in one of the components shown in Figure 5 in order to detect a position of the actuator 5 with respect to the holding means 8, in particular the die 9.

## Claims

1. Method for disassembling a hard disk drive (1) comprising the following method steps:
A) Providing the hard disk drive (1), which at least comprises a magnetic disk (4), a spindle assembly (3) and an actuator (5), wherein the magnetic disk (4) is rotatably mounted by means of the spindle assembly (3) and wherein the actuator (5) is configured to move a read/write-head (7) relative to the magnetic disk (4) and is arranged adjacently to the magnetic disk (4);
B) Positioning the hard disk drive (1) in a separating device (21), which comprises a holding means (8), by means of which the hard disk drive (1) is held and which further comprises at least a separating means (13), which is moveably mounted with respect to the holding means (8);
C) Moving the separating means (13) relative to the holding means (8) such that the separating means (13) comes into separating engagement with the hard disk drive (1), thereby separating at least the magnetic disk (4), the spindle assembly (3) and the actuator (5) of the hard disk drive (1) from each other, in particular in a single process step;
D) Separately discharging of at least three fractions of the hard disk drive (1), which comprise the magnetic disk (4), the spindle assembly (3) and the actuator (5) respectively.

2. Method according to claim 1, wherein
before and/or during method step B) a position of the actuator (5) with respect to the hard disk drive (1) and/or with respect to the holding means (8) is detected and in method step B) the hard disk drive (1) is arranged or rearranged in the holding means (8) depending on the position of the actuator (5).

3. Method according to claim 2, wherein
the position of the actuator (5) is detected by means of a magnetic sensor (20).

4. Method according to at least one of the preceding claims, wherein
the holding means (8) comprises at least a support section, on which the hard disk drive (1) rests at least during method step C) and wherein the holding means (8) comprises at least one recess section (11, 12) into which the separating means (13) engages during method step C), in particular wherein the at least one recess section (11, 12) of the holding means (8) is in front and/or behind the hard disk drive (1) with respect to the motion of the separating means and wherein preferably at least the spindle assembly and the actuator are discharged through the at least one recess section (11, 12) in method step D).

5. Method according to at least one of the preceding claims, wherein
the holding means (8) comprises a die (9) and a holder (10) and the hard disk drive (1) is at least partially arranged between the die (9) and the holder (10) in method step B).

6. Method according to at least one of the preceding claims, wherein
the separating means (13) comprises at least two separating portions (14, 15), which each engage with the hard disk drive (1) in method step C) in order to separate the magnetic disk (4), the spindle assembly (3) and the actuator (5) from each other.

7. Method according to at least claim 6, wherein
a first separating portion (14) is at least partially defined by a cutting edge, in particular straight cutting edge, which engages with the hard disk drive (1) adjacently to a corner region (19), in which the actuator (5) is arranged and/or wherein
a second separating portion (15) is at least partially defined by a punching stamp, which engages with the spindle assembly (3) and/or with a region of the magnetic disk, which surrounds the spindle assembly (3).

8. Method according to one of the preceding claims, wherein
positioning of the hard disk drive (1) in method step B) is at least partially performed by a setting movement of a positioning means, which performs a return movement during method step C) simultaneously to the motion of the separating means (13).

9. Method according to one of the preceding claims, wherein
before method step B) a size of the hard disk drive (1) is determined and the holding means (8) and/or the separating means (13) are changeably mounted in the separating device (21) in particular depending on the size of the hard disk drive (1).

10. Method according to one of the preceding claims, wherein
In method step C) the separating means (13 are moved hydraulically and in particular exert a force of up to 250.000,00 Newtons to the hard disk drive (1).

11. Separating device (21) for disassembling a hard disk drive (1) by a method according to one of the claims 1 to 10, comprising
a holding means (8), which is configured to hold the hard disk drive (1) further comprising a separating means (13), which is moveably mounted with respect to the holding means (8), and which is configured to come into separating engagement with the hard disk drive (1) during a relative motion with respect to the holding means (8) in order to separate the hard disk drive (1) in three fractions, which each in particular comprise a magnetic disk (4), a spindle assembly (3) and an actuator (5) of the hard disk drive (1).

12. Separating device (21) according to one of the claim 11, comprising a detection means (20), which is arranged and configured to detect a position of the actuator (5) with respect to the hard disk drive (1) and/or with respect to the holding means (8).

13. Separating device according to claim 12, wherein the detection means comprises a magnetic sensor (20).

14. Separating device (21) according to one of the claims 11 to 13, wherein
the holding means (8) comprises at least a support section, which is configured to receive the hard disk drive (1) and wherein the holding means comprises at least a recess section (11,12)
and wherein the holding means (8) and the separating means (13) are arranged such that the separating means (13) engage with the at least one recess section (11, 12) of the holding means (8) during the relative motion.

15. Separating device according to 14, wherein
the separating means (13) comprise a first separating portion (14), which is at least partly defined by a cutting edge, in particular a straight cutting edge, and a second separating portion (15), which is at least partly defined by a punching stamp.
